# FASCICULE DE BREVET EUROPEEN

(11) **EP 3 077 334 B1**
(45) Date de publication et mention de la délivrance du brevet: **21.08.2019**
(21) Numéro de dépôt: 14806277.1
(22) Date de dépôt: 03.12.2014
(51) Int. Cl.: C01B 21/086

(54) **PROCEDE DE PREPARATION DE L'ACIDE BIS-FLUOROSULFONYLIMIDE ET DE SES SELS**
VERFAHREN ZUR HERSTELLUNG VON BIS(FLUORSULFONYL)IMIDSÄURE UND SALZEN DAVON
METHOD FOR PREPARING BIS(FLUOROSULFONYL)IMIDE ACID AND SALTS THEREOF

(30) Priorité: 05.12.2013 FR 1362137
(43) Date de publication de la demande: 12.10.2016
(73) Titulaire: Rhodia Operations, 75009 Paris (FR)
(72) Inventeur: BUISINE, Olivier, F-69230 Saint Genis-Laval (FR)
(74) Mandataire: Menville, Laure
(86) Numéro de dépôt international: PCT/EP2014/076388
(87) Numéro de publication internationale: WO 2015/082532

(56) Documents cités:
- EP-A1- 2 415 757
- WO-A1-02/053494
- MARTIN BERAN ET AL: "A New Method of the Preparation of Imido-bis(sulfuric acid) Dihalogenide, (F, Cl), and the Potassium Salt of Imido-bis(sulfuric acid) Difluoride", ZEITSCHRIFT FÜR ANORGANISCHE UND ALLGEMEINE CHEMIE, vol. 631, no. 1, 1 janvier 2005 (2005-01-01), pages 55-59, XP055014688, ISSN: 0044-2313, DOI: 10.1002/zaac.200400325 cité dans la demande

## Description

La présente invention a pour objet un procédé de préparation de l'acide bis-fluorosulfonylimide (FSIH) et de ses sels, notamment du bis-fluorosulfonylimidure de lithium LiFSI.

La production de FISH et de LiFSI est largement décrite dans la littérature. Parmi les différentes technologies décrites, la majorité met en oeuvre une réaction de fluoration soit par HF soit par des fluorures métalliques. L'utilisation de fluorures métalliques est problématique car elle est souvent peu efficace et met en oeuvre des réactifs onéreux tel que l'acide fluorosulfurique. Par exemple, la fluoration par le fluorure de potassium dans le nitrométhane ou autres solvants organiques polaires est peu efficace en termes de rendement (WO 2002/053494). D'autres technologies ont été développées, par exemple en mettant en oeuvre le chlorosulfonyle isocyanate en présence d'oléum et du fluorure d'ammonium (JP 2012-162470) ou encore en utilisant l'urée et l'acide fluorosulfonique, mais ces technologies pâtissent de la forte corrosion du milieu ainsi que de l'exothermie de la réaction. Ces inconvénients rendent ces technologies peu adaptées pour une production industrielle de l'acide bis-fluorosulfonylimide (FSIH) et de ses sels. La publication scientifique de Beran et Prihoda (Z. Anorg. Allg. Chem., 2005, 631, 55-59) décrit également des méthodes de préparation de l'acide bisfluorosulfonimide et de ses sels. Toutefois, les voies de synthèse proposées impliquent l'utilisation de chlorure de thionyle, puis la conversion du composé chloré obtenu en composé fluoré.

Aussi le besoin de produire l'acide bis-fluorosulfonylimide (FSIH) et ses sels selon un procédé alternatif remédiant aux inconvénients cités ci-dessus est grand. De manière surprenante, la Demanderesse a mis au point un nouveau procédé de production de l'acide bis-fluorosulfonylimide (FSIH) et de ses sels opérant dans des conditions douces et sans exothermie. Le procédé selon la présente invention présente l'avantage de pouvoir être mis facilement en oeuvre à l'échelle industrielle.

La présente invention a pour objet un procédé de préparation de l'acide bis-fluorosulfonylimide de formule F-SO₂-NH-SO₂-F (FSIH) comprenant la réaction de l'acide sulfamique ou l'un de ses sels avec au moins un acide halogénosulfurique et au moins un agent de fluoration choisi parmi le fluorure de sulfonyle (SOF₂), le fluorure de sulfuryle (F-SO₂-F) et le tétrafluorure de soufre (SF₄) puis la récupération de l'acide bis-fluorosulfonylimide.

Conformément au procédé de l'invention, l'acide halogénosulfurique présente la formule X-SO₂-OH où X est un halogène choisi parmi le fluor, le chlore, le brome et l'iode. De manière préférée, ledit halogène est le fluor (acide fluorosulfurique) ou le chlore (acide chlorosulfurique). L'acide sulfamique ou l'un de ses sels présente la formule générale M₁O-SO₂-NH₂, où M₁ = H, un métal alcalin ou un métal alcalino-terreux. De manière avantageuse, ledit agent de fluoration est le fluorure de sulfuryle (F-SO₂-F). La réaction mise en oeuvre dans le procédé de l'invention est avantageusement conduite en présence d'un solvant, préférentiellement un solvant organique. Ledit solvant est par exemple un hydrocarbure aliphatique linéaire ou ramifié ou un hydrocarbure aromatique, par exemple le toluène, le xylène, le chlorobenzène, le dichlorobenzène ou le nitrobenzène. De manière préférée, on utilise le dichlorobenzène.

Conformément au procédé de l'invention, ledit agent de fluoration représente avantageusement de 1 à 10, de préférence de 2 à 5 équivalent(s) molaire(s) exprimé(s) par rapport à l'acide sulfamique ou ses sels. Lorsque la réaction selon le procédé de l'invention est conduite en présence d'un solvant, celui-ci représente avantageusement de 10 à 90% poids de la masse du mélange réactionnel, lequel comprend l'ensemble des réactifs et le solvant.

Selon un mode de réalisation du procédé de l'invention consistant à utiliser le fluorure de sulfuryle (SO₂F₂) comme agent de fluoration, l'acide halogénosulfurique représente avantageusement de 1% molaire à 5 équivalents molaires exprimé(s) par rapport à l'acide sulfamique ou ses sels, de préférence de 5% molaire à 1 équivalent molaire exprimé(s) par rapport à l'acide sulfamique ou ses sels. Avantageusement, lorsque l'agent de fluoration utilisé est le fluorure de sulfuryle, l'acide halogénosulfurique peut être utilisé en quantité catalytique, de préférence inférieure à 1 équivalent molaire. Ce mode de réalisation est préféré car il permet de limiter la quantité d'acide halogénosulfurique à introduire pour la mise en oeuvre du procédé de l'invention.

Selon un autre mode de réalisation du procédé de l'invention consistant à utiliser le fluorure de sulfonyle (SOF₂) ou le tétrafluorure de soufre (SF₄) comme agent de fluoration, l'acide halogénosulfurique représente de 1 à 5, de préférence de 1 à 2 équivalent(s) molaire(s) exprimé(s) par rapport à l'acide sulfamique ou ses sels.

La réaction mise en oeuvre selon le procédé de l'invention est opérée à une température préférentiellement comprise entre 0°C et 180°C, très préférentiellement comprise entre 80 et 150°C. Elle est avantageusement conduite à une pression variant entre 1 et 100 bar, de préférence elle est conduite sous pression autogène.

Le procédé de préparation de FSIH selon l'invention est simple à mettre en oeuvre.

Les réactifs peuvent être introduits dans n'importe quel ordre selon différentes variantes mais certaines sont préférées.

Un mode de réalisation préféré consiste à mélanger l'acide sulfamique ou ses sels, éventuellement présent(s) dans ledit solvant, et l'acide halogénosulfurique puis à introduire ledit agent de fluoration. Ledit agent de fluoration est introduit soit sous forme gazeuse, généralement à pression atmosphérique et/ou à température ambiante, soit sous forme liquide, généralement sous pression et/ou à basse température. On porte le mélange réactionnel sous agitation à la température de la réaction choisie dans l'intervalle tel que précédemment défini. On maintient le chauffage du mélange réactionnel pendant une durée variable, par exemple pendant une durée variant de 1 heure à 48 heures et préférentiellement variant de 3 à 12 heures. Il est encore avantageux d'introduire ledit agent de fluoration une fois que le milieu ait été porté à la température de réaction.

Après maintien sous agitation du milieu réactionnel, à la température choisie, on obtient en fin de réaction, l'acide bis-fluorosulfonylimide. Le milieu réactionnel obtenu en fin de réaction est ramené à pression atmosphérique le cas échéant. Les produits volatils présents dans ledit milieu, généralement HF, SO₃ et éventuellement le réactif de fluoration en excès, sont évaporés.

Ledit acide bis-fluorosulfonylimide est ensuite récupéré par différentes techniques connues en elles-mêmes par l'Homme du métier.

Un premier mode de réalisation consiste à récupérer l'acide bis-fluorosulfonylimide par distillation. Le milieu réactionnel issu de la réaction et dépourvu des produits volatils est soumis à une distillation, de préférence sous pression réduite, à une température comprise préférentiellement entre 100 et 250°C, et à une pression comprise préférentiellement entre 0,5 et 10 bar. On récupère le FSIH sous forme liquide.

Un deuxième mode de réalisation consiste à récupérer l'acide bis-fluorosulfonylimide par sublimation. Le milieu réactionnel issu de la réaction et dépourvu des produits volatils est soumis à un traitement par sublimation à une température comprise préférentiellement entre 50 et 250°C, très préférentiellement entre 80 et 140°C et à une pression comprise préférentiellement entre 1 mbar et 1 bar, très préférentiellement entre 10 mbar et 500 mbar. On récupère le FSIH sous forme solide.

Un troisième mode de réalisation consiste simplement à maintenir l'acide bis-fluorosulfonylimide dans le mélange réactionnel issu de la réaction et dépourvu des produits volatils en ramenant ledit milieu à la pression atmosphérique et à une température inférieure à 160°C, de préférence comprise entre 20 et 80°C. L'acide bis-fluorosulfonylimide peut ainsi directement être utilisé, dans l'étape subséquente de salification, en solution ou suspension dans le solvant dans lequel ladite réaction a été mise en oeuvre.

Un quatrième mode de réalisation consiste à récupérer l'acide bis-fluorosulfonylimide par extraction avec un solvant. Le solvant peut être choisi parmi les solvants organiques. Ledit solvant peut être par exemple un hydrocarbure aliphatique linéaire ou ramifié ou un hydrocarbure aliphatique halogéné, tel le dichlorométhane ou le dichloroéthane. De manière préférée, on peut utiliser le dichloroéthane.

Le procédé de l'invention est avantageusement conduit dans un appareillage susceptible de résister à la corrosion du milieu réactionnel.

A cet effet, on choisit des matériaux pour la partie en contact avec le milieu réactionnel résistant à la corrosion comme les alliages à base de molybdène, chrome, cobalt, fer, cuivre manganèse, titane, zirconium, aluminium, carbone et tungstène vendus sous les marques HASTELLOY® ou les alliages de nickel, chrome, fer, manganèse additivés de cuivre et/ou molybdène commercialisés sous la dénomination INCONEL® , MONEL™ et plus particulièrement les alliages HASTELLOY C 276 ou INCONEL 600, 625 ou 718. On peut choisir également les aciers inoxydables, tels que les aciers austénitiques [Robert H. Perry et al, Perry's Chemical Engineers' Handbook, Sixth Edition (1984), page 23-44], et plus particulièrement les aciers inoxydables 304, 304 L, 316 ou 316 L. On met en oeuvre un acier ayant une teneur en nickel au plus de 22 % en masse, de préférence comprise entre 6 et 20 %, et plus préférentiellement comprise entre 8 et 14 %. Les aciers 304 et 304 L ont une teneur en nickel variant entre 8 et 12 % et les aciers 316 et 316 L ont une teneur en nickel variant entre 10 et 14 %. On choisit plus particulièrement les aciers 316 L.

On peut aussi faire appel à un appareillage constitué ou revêtu d'un composé polymérique résistant à la corrosion du milieu réactionnel. On peut citer notamment, les matériaux tels que PTFE (polytétrafluoroéthylène ou Teflon) ou PFA (résines perfluoroalkyles). On ne sortira pas du cadre de l'invention à utiliser un matériau équivalent.

Comme autres matériaux susceptibles de convenir pour être en contact avec le milieu réactionnel, on peut également mentionner les dérivés du graphite.

Le procédé de préparation du FSIH selon l'invention peut être mis en oeuvre en continu, en discontinu ou en semi-continu.

On préfère généralement disposer de sels de FSIH car ils trouvent plus facilement une application que le FSIH lui-même. Aussi, un autre objet de l'invention est un procédé de préparation d'au moins un sel du bis-fluorosulfonylimidure à partir du procédé de préparation de l'acide bis-fluorosulfonylimide tel que décrit ci-dessus. Ledit sel du bis-fluorosulfonylimidure présente la formule générale F-SO₂-N-M-SO₂-F, où M représente un métal alcalin (Li, Na, K, Rb, Cs), un métal alcalino-terreux, un métal de transition ou un métal choisi parmi les lanthanides. De manière préférée, M est un métal alcalin, en particulier le lithium : le sel ainsi obtenu est le bis-fluorosulfonylimidure de lithium (LiFSI). Le procédé de préparation d'au moins un sel du bis-fluorosulfonylimidure selon l'invention consiste en la mise en contact de l'acide bis-fluorosulfonylimide préparé selon le procédé décrit ci-dessus avec au moins un agent de salification. L'agent de salification est par exemple un hydroxyde métallique, un halogénure métallique, un hydrure métallique, un trifluoroacétate métallique ou un trifluorométhanesulfonate métallique. Le métal présent dans ledit hydroxyde métallique, ledit halogénure métallique, ledit hydrure métallique, ledit trifluoroacétate métallique ou ledit trifluorométhanesulfonate métallique est préférentiellement choisi parmi les métaux alcalins, les métaux alcalino-terreux, les métaux de transition ou les métaux choisis parmi les lanthanides. La stoechiométrie de cette étape de salification est telle que l'on utilise de 1 à 5, de préférence de 1 à 2 équivalents molaires d'agent de salification par rapport à l'acide bis-fluorosulfonylimide.

Ledit procédé de préparation d'au moins un sel du bis-fluorosulfonylimidure selon l'invention est opéré en présence ou en l'absence d'un solvant, préférentiellement en présence d'un solvant. Le solvant est par exemple l'eau ou un solvant organique choisi parmi les hydrocarbures aliphatiques linéaires ou ramifiés, les hydrocarbures aromatiques (toluène, xylène, chlorobenzène, dichlorobenzène), les composés nitrile (acétonitrile, butyronitrile, valéronitrile, adiponitrile) et les carbonates d'alkyle (éthylène de carbonate, propylène de carbonate, diméthyl-carbonate, diéthyl-carbonate). Ledit solvant peut représenter jusqu'à 90% poids, de préférence de 10 à 80% poids de la masse du mélange réactionnel, lequel comprend l'ensemble des réactifs et le solvant.

Le procédé de préparation d'un sel du bis-fluorosulfonylimidure selon l'invention est opéré à une température préférentiellement inférieure à 100°C, très préférentiellement comprise entre 20 et 50°C. Ledit procédé est préférentiellement mis en oeuvre à pression atmosphérique.

Le procédé de préparation d'un sel du bis-fluorosulfonylimidure selon l'invention est simple à mettre en oeuvre. On ajoute le FSIH sur l'agent de salification ou inversement. L'un ou l'autre peut se trouver à l'état pur tandis que l'un au moins de ces deux réactifs est préférentiellement présent dans un solvant.

Le sel du bis-fluorosulfonylimidure est isolé par filtration ou évaporation du solvant.

Le procédé de préparation de sels du bis-fluorosulfonylimidure selon l'invention peut être mis en oeuvre en continu, en discontinu ou en semi-continu.

Le procédé de préparation de sels du bis-fluorosulfonylimidure selon l'invention comprenant en outre une étape de purification dudit sel. Cette étape de purification peut notamment consister en une recristallisation. Le solvant de recristallisation peut être choisi parmi les solvants oxygénés, par exemple des éthers ou des esters. Des exemples de solvants éther sont le tétrahydrofurane, le dioxane, les glymes.

La purification d'un sel du bis-fluorosulfonylimidure par recristallisation peut également être un objet de la présente invention indépendamment du procédé d'obtention dudit sel.

Après son isolation et éventuellement sa purification, le sel du bis-fluorosulfonylimidure peut être séché par les méthodes classiques connues de l'homme du métier, par exemple par séchage classique, par séchage sous pression réduite, ou par séchage par pulvérisation (spray-drying).

L'utilisation des sels du bis-fluorosulfonylimidure préparés selon le procédé décrit ci-dessus comme sels d'électrolyte, comme précurseurs d'agent anti-statique ou encore comme précurseurs de tensio-actif, est aussi décrite. En particulier, lesdits sels sont avantageusement employés comme électrolytes pour la fabrication de batteries, dans le domaine de l'électrochromisme et de l'électronique. Ils sont avantageusement employés comme agents antistatiques pour la fabrication d'adhésifs sensibles à la pression (PSA : pressure sensitive adhesives). En tant qu'agent anti-statique, ils peuvent encore être employés comme composants de lubrifiants. Ils sont utilisés dans les matériaux optiques tels que les appareils électroluminescents et entrent dans la composition de panneaux photovoltaïques.

On donne ci-après un exemple de réalisation de l'invention. Cet exemple est donné à titre illustratif et sans caractère limitatif.

### Exemple 1 :

Un réacteur en Hastelloy C276 de 500 mL est chargé avec une solution d'acide sulfamique (22,4 g ; 230 mmoles) dans 30 grammes d'orthodichlorobenzène. De l'acide fluorosulfonique (1,2 g ; 12 mmoles) est ajouté et l'autoclave est fermé. Le milieu est chauffé à la température de 92°C. Le fluorure de sulfuryle (47 grammes ; 0,46 moles) est additionné de façon à maintenir la pression inférieure à P = 37 bar. L'addition est réalisée en 9 heures.

La température est ensuite ramenée à l'ambiante et le réacteur est décomprimé. Une analyse du milieu réactionnel par RMN du fluor 19 montre que l'acide bis fluorosulfonylimide attendu est formé avec un rendement de 52%.

### Exemple 2 :

Un réacteur en Hastelloy C276 de 500 mL est chargé avec une solution d'acide sulfamique (22,4 g ; 230 mmoles) dans 300 grammes de dichloroéthane. De l'acide fluorosulfonique (1,2 g ; 12 mmoles) est ajouté et l'autoclave est fermé. Le milieu est chauffé à la température de 92°C. Le fluorure de sulfuryle (47 grammes ; 0,46 moles) est additionné de façon à maintenir la pression inférieure à P = 37 bar. L'addition est réalisée en 10 heures.

La température est ensuite ramenée à l'ambiante et le réacteur est décomprimé. Une analyse du milieu réactionnel par RMN du fluor 19 montre que l'acide bis-fluorosulfonylimide attendu est formé avec un rendement de 53%.

### Exemple 3 :

Un réacteur en Hastelloy C276 de 500 mL est chargé avec 200 g dichloroéthane puis fermé et laissé sous agitation à température ambiante et purgé avec de l'azote. Le fluorure de thionyle (60 g ; 0,34 moles) est ensuite ajouté sous pression dans le réacteur. L'acide sulfamique (22,3 g ; 0,23 moles) en solution dans le dichloroéthane (100 g) puis l'acide chlorosulfurique (26,8 g ; 0,23 moles) sont ajoutés dans l'autoclave. La température est ensuite maintenue à 80°C pendant 17 heures. La pression observée atteint 22 bars en fin de réaction à cette température. Après retour à température ambiante, le réacteur est décomprimé.

L'analyse du milieu par RMN ¹⁹F indique que l'acide bis-fluorosulfonylimide est obtenu avec un rendement de 77%.

### Exemple 4 :

La solution obtenue dans l'exemple 3 contenant l'acide bis-fluorosulfonylimide est concentrée à température ambiante sous pression réduite en maintenant la température du milieu inférieure à 80°C.

Le résidu obtenu est distillé sous pression réduite (P = 5 mbar) en maintenant la température du bouilleur inférieure à 80°C.

Sous atmosphère inerte, l'acide bis-fluorosulfonyl-imide ainsi distillé est ajouté lentement sur une suspension d'hydrure de lithium (1,15 g ; 0,145 moles) dans l'acétate de butyle anhydre (55 g). La solution est ensuite refroidie à -20°C et le solide obtenu est récupéré par filtration.

Le solide est purifié une seconde fois par recristallisation dans l'acétate de butyle.

Le solide obtenu est ensuite rincé au dichlorométhane et séché sous vide.

Le bis-fluorosulfonylimidure de lithium obtenu a une pureté supérieure à 90% en poids.

## Revendications

1. Procédé de préparation de l'acide bis-fluorosulfonylimide de formule F-SO₂-NH-SO₂-F comprenant la réaction de l'acide sulfamique ou l'un de ses sels avec au moins un acide halogénosulfurique et au moins un agent de fluoration choisi parmi SOF₂, F-SO₂-F et SF₄ puis la récupération de l'acide bis-fluorosulfonylimide.

2. Procédé de préparation de l'acide bis-fluorosulfonylimide selon la revendication 1 dans lequel l'acide halogénosulfurique présente la formule X-SO₂-OH où X est un halogène choisi parmi le fluor, le chlore, le brome et l'iode.

3. Procédé de préparation de l'acide bis-fluorosulfonylimide selon la revendication 1 ou la revendication 2 dans lequel ladite réaction est conduite en présence d'un solvant organique.

4. Procédé de préparation de l'acide bis-fluorosulfonylimide selon l'une des revendications 1 à 3 dans lequel l'acide halogénosulfurique représente de 1% molaire à 5 équivalents molaires exprimé(s) par rapport à l'acide sulfamique ou ses sels lorsque l'agent de fluoration est F-SO₂-F.

5. Procédé de préparation de l'acide bis-fluorosulfonylimide selon la revendication 4 dans lequel l'acide halogénosulfurique représente de 5% molaire à 1 équivalent molaires exprimé(s) par rapport à l'acide sulfamique ou ses sels lorsque l'agent de fluoration est F-SO₂-F.

6. Procédé de préparation de l'acide bis-fluorosulfonylimide selon l'une des revendications 1 à 3 dans lequel l'acide halogénosulfurique représente de 1 à 5 équivalent(s) molaire(s) exprimé(s) par rapport à l'acide sulfamique ou ses sels lorsque l'agent de fluoration est SOF₂ ou SF₄.

7. Procédé de préparation de l'acide bis-fluorosulfonylimide selon l'une des revendications 1 à 6 dans lequel ledit agent de fluoration représente de 1 à 10 équivalent(s) molaire(s) exprimé(s) par rapport à l'acide sulfamique ou ses sels.

8. Procédé de préparation de l'acide bis-fluorosulfonylimide selon l'une des revendications 1 à 7 dans lequel ladite réaction est opérée à une température comprise entre 0 et 180°C.

9. Procédé de préparation de l'acide bis-fluorosulfonylimide selon l'une des revendications 1 à 8 dans lequel ledit acide bis-fluorosulfonylimide est récupéré par distillation, par sublimation ou par extraction.

10. Procédé de préparation d'au moins un sel du bis-fluorosulfonylimidure comprenant la préparation de l'acide bis-fluorosulfonylimide selon le procédé tel que défini selon les revendications 1 à 9 suivie de la mise en contact dudit acide avec au moins un agent de salification.

11. Procédé de préparation d'au moins un sel du bis-fluorosulfonylimide selon la revendication 10 dans lequel ledit agent de salification est un hydroxyde métallique, un halogénure métallique, un hydrure métallique, un trifluoroacétate métallique ou un trifluorométhanesulfonate métallique.

12. Procédé de préparation d'au moins un sel du bis-fluorosulfonylimide selon la revendication 10 ou la revendication 11 dans lequel ledit sel présente la formule générale F-SO₂-N-M-SO₂-F, où M représente un métal alcalin, un métal alcalino-terreux, un métal de transition ou un métal choisi parmi les lanthanides.

13. Procédé de préparation d'au moins un sel du bis-fluorosulfonylimide selon l'une des revendications 10 à 12 dans lequel ledit sel est le bis-fluorosulfonylimidure de lithium.

14. Procédé de préparation d'au moins un sel du bis-fluorosulfonylimidure selon l'une des revendications 10 à 13 comprenant en outre une étape de purification dudit sel.

15. Procédé de préparation d'au moins un sel du bis-fluorosulfonylimidure selon la revendication 14 dans lequel l'étape de purification consiste en une recristallisation.

## Patentansprüche

1. Verfahren zur Herstellung von Bis(fluorsulfonyl)-imidsäure der Formel F-SO₂-NH-SO₂-F, bei dem man Sulfamidsäure oder eines ihrer Salze mit mindestens einer Halogenschwefelsäure und mindestens einem Fluorierungsmittel, das aus SOF₂, F-SO₂-F und SF₄ ausgewählt wird, umsetzt und dann die Bis(fluorsulfonyl)imidsäure gewinnt.

2. Verfahren zur Herstellung von Bis(fluorsulfonyl)-imidsäure nach Anspruch 1, wobei die Halogenschwefelsäure die Formel X-SO₂-OH aufweist, wobei X für ein Halogen, das aus Fluor, Chlor, Brom und Iod ausgewählt ist, steht.

3. Verfahren zur Herstellung von Bis(fluorsulfonyl)-imidsäure nach Anspruch 1 oder Anspruch 2, wobei die Umsetzung in Gegenwart eines organischen Lösungsmittels durchgeführt wird.

4. Verfahren zur Herstellung von Bis(fluorsulfonyl)-imidsäure nach einem der Ansprüche 1 bis 3, wobei die Halogenschwefelsäure 1 Mol-% bis 5 Moläquivalente, ausgedrückt in Bezug auf die Sulfamidsäure oder deren Salze, ausmacht, wenn es sich bei dem Fluorierungsmittel um F-SO₂-F handelt.

5. Verfahren zur Herstellung von Bis(fluorsulfonyl)-imidsäure nach Anspruch 4, wobei die Halogenschwefelsäure 5 Mol-% bis 1 Moläquivalent, ausgedrückt in Bezug auf die Sulfamidsäure oder deren Salze, ausmacht, wenn es sich bei dem Fluorierungsmittel um F-SO₂-F handelt.

6. Verfahren zur Herstellung von Bis(fluorsulfonyl)-imidsäure nach einem der Ansprüche 1 bis 3, wobei die Halogenschwefelsäure 1 bis 5 Moläquivalente, ausgedrückt in Bezug auf die Sulfamidsäure oder deren Salze, ausmacht, wenn es sich bei dem Fluorierungsmittel um SOF₂ oder SF₄ handelt.

7. Verfahren zur Herstellung von Bis(fluorsulfonyl)-imidsäure nach einem der Ansprüche 1 bis 6, wobei das Fluorierungsmittel 1 bis 10 Moläquivalente, ausgedrückt in Bezug auf die Sulfamidsäure oder deren Salze, ausmacht.

8. Verfahren zur Herstellung von Bis(fluorsulfonyl)-imidsäure nach einem der Ansprüche 1 bis 7, wobei die Umsetzung bei einer Temperatur zwischen 0 und 180 °C durchgeführt wird.

9. Verfahren zur Herstellung von Bis(fluorsulfonyl)-imidsäure nach einem der Ansprüche 1 bis 8, wobei die Bis(fluorsulfonyl)imidsäure durch Destillation, Sublimation oder Extraktion gewonnen wird.

10. Verfahren zur Herstellung von mindestens einem Bis(fluorsulfonyl)imid-Salz, bei dem man die Bis(fluorsulfonyl)imidsäure nach dem Verfahren gemäß den Ansprüchen 1 bis 9 herstellt und die Säure dann mit mindestens einem Versalzungsmittel in Kontakt bringt.

11. Verfahren zur Herstellung von mindestens einem Bis(fluorsulfonyl)imid-Salz nach Anspruch 10, wobei es sich bei dem Versalzungsmittel um ein Metallhydroxid, ein Metallhalogenid, ein Metallhydrid, ein Metalltrifluoracetat oder ein Metalltrifluormethansulfonat handelt.

12. Verfahren zur Herstellung von mindestens einem Bis(fluorsulfonyl)imid-Salz nach Anspruch 10 oder Anspruch 11, wobei das Salz die allgemeine Formel F-SO₂-N-M-SO₂-F aufweist, wobei M für ein Alkalimetall, ein Erdalkalimetall, ein Übergangsmetall oder ein aus den Lanthaniden ausgewähltes Metall steht.

13. Verfahren zur Herstellung von mindestens einem Bis(fluorsulfonyl)imid-Salz nach einem der Ansprüche 10 bis 12, wobei es sich bei dem Salz um Lithiumbis(fluorsulfonyl)imid handelt.

14. Verfahren zur Herstellung von mindestens einem Bis(fluorsulfonyl)imid-Salz nach einem der Ansprüche 10 bis 13, das außerdem einen Schritt der Reinigung des Salzes umfasst.

15. Verfahren zur Herstellung von mindestens einem Bis(fluorsulfonyl)imid-Salz nach Anspruch 14, wobei der Reinigungsschritt aus einer Umkristallisation besteht.

## Claims

1. Process for preparing bis(fluorosulfonyl)imide acid of formula F-SO₂-NH-SO₂-F, comprising the reaction of sulfamic acid or a salt thereof with at least one halosulfuric acid and at least one fluorinating agent selected from SOF₂, F-SO₂-F and SF₄, then the recovery of the bis(fluorosulfonyl)imide acid.

2. Process for preparing bis(fluorosulfonyl)imide acid according to Claim 1, wherein the halosulfuric acid has the formula X-SO₂-OH where X is a halogen selected from fluorine, chlorine, bromine and iodine.

3. Process for preparing bis(fluorosulfonyl)imide acid according to Claim 1 or Claim 2, wherein said reaction is carried out in the presence of an organic solvent.

4. Process for preparing bis(fluorosulfonyl)imide acid according to one of Claims 1 to 3, wherein the halosulfuric acid represents from 1 mol% to 5 molar equivalents expressed relative to the sulfamic acid or salts thereof when the fluorinating agent is F-SO₂-F.

5. Process for preparing bis(fluorosulfonyl)imide acid according to Claim 4, wherein the halosulfuric acid represents from 5 mol% to 1 molar equivalent expressed relative to the sulfamic acid or salts thereof when the fluorinating agent is F-SO₂-F.

6. Process for preparing bis(fluorosulfonyl)imide acid according to one of Claims 1 to 3, wherein the halosulfuric acid represents from 1 to 5 molar equivalent(s) expressed relative to the sulfamic acid or salts thereof when the fluorinating agent is SOF₂ or SF₄.

7. Process for preparing bis(fluorosulfonyl)imide acid according to one of Claims 1 to 6, wherein said fluorinating agent represents from 1 to 10 molar equivalent(s) expressed relative to the sulfamic acid or salts thereof.

8. Process for preparing bis(fluorosulfonyl)imide acid according to one of Claims 1 to 7, wherein said reaction is performed at a temperature between 0 and 180°C.

9. Process for preparing bis(fluorosulfonyl)imide acid according to one of Claims 1 to 8, wherein said bis(fluorosulfonyl)imide acid is recovered by distillation, by sublimation or by extraction.

10. Process for preparing at least one bis(fluorosulfonyl)imide salt, comprising preparing the bis(fluorosulfonyl)imide acid according to the process as defined in Claims 1 to 9, followed by bringing said acid into contact with at least one salification agent.

11. Process for preparing at least one bis(fluorosulfonyl)imide salt according to Claim 10, wherein said salification agent is a metal hydroxide, a metal halide, a metal hydride, a metal trifluoroacetate or a metal trifluoromethanesulfonate.

12. Process for preparing at least one bis(fluorosulfonyl)imide salt according to Claim 10 or Claim 11, wherein said salt has the general formula F-SO₂-N-M-SO₂-F, where M represents an alkali metal, an alkaline-earth metal, a transition metal or a metal selected from lanthanides.

13. Process for preparing at least one bis(fluorosulfonyl)imide salt according to one of Claims 10 to 12, wherein said salt is lithium bis(fluorosulfonyl)imide.

14. Process for preparing at least one bis(fluorosulfonyl)imide salt according to one of Claims 10 to 13, also comprising a step of purifying said salt.

15. Process for preparing at least one bis(fluorosulfonyl)imide salt according to Claim 14, wherein the purification step consists of a recrystallization.
